(19) Europäisches Patentamt

European Patent Office

Office européen des brevets

(11) **EP 1 011 210 A1**

(12) **EUROPEAN PATENT APPLICATION**

(43) Date of publication:
**21.06.2000 Bulletin 2000/25**

(51) Int. Cl.[7]: **H04B 7/204**

(21) Application number: **98310281.5**

(22) Date of filing: **15.12.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ICO Services Ltd.**
**London W6 9BN (GB)**

(72) Inventors:
• **Quan, Philip Hon Hghia**
**Epsom, Surrey, KT19 8HE (GB)**

• **Munoz-Garcia, Samuel G.**
**Barnes London, SW13 9RU (GB)**
• **Wisloff, Tor**
**Hammersmith, W6 8JA (GB)**

(74) Representative:
**Read, Matthew Charles et al**
**Venner Shipley & Co.**
**20 Little Britain**
**London EC1A 7DH (GB)**

(54) **Allocation of radio frequency spectrum**

(57) In a method of allocating spectral resources in a cellular mobile telecommunications network, worst case non-reuse areas (WNRA) are defined corresponding to a group of cells (A,B,C,D) wherein spectrum cannot be used more than once concurrently, and considered in relation to a plurality of zones (Z), within the area of coverage of the network. The non-reuse areas each overly a respective one of said zones and partially overlap zones adjacent to the overlaid zone. A maximum available spectrum ($s$) is defined for the zones respectively, together with an offered traffic spectrum ($o$) corresponding to the spectrum to be consumed by call traffic in the zones individually. Spectrum is allocated to the non-reuse areas for allocating spectrum to their respective overlaid zones. A determination is made of the spectrum used in zones that are partially overlapped by the non-reuse areas as a result of the allocation of spectrum to the non-reuse areas. This allows the allocation of spectrum to the zones to be optimised individually in relation to their offered spectrum and their available spectrum and to maximise the system's capacity to handle the offered traffic spectrum for all of the zones.

FIG. 1

EP 1 011 210 A1

**Description**

The present invention relates to allocating radio frequency spectrum and has particular application to a cellular telecommunications system such as a satellite telecommunications network.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the Global System Mobile (GSM) network has become popular, whereas in USA, the Advanced Mobile Phone Service (AMPS) and the Digital American Mobile Phone System (DAMPS) are in use, and in Japan, the Personal Handiphone System (PHS) and the Personal Digital Communication (PDC) network are used. More recently, proposals have been made for a Universal Mobile Telecommunications System (UMTS). These networks are all cellular and land-based with transmitter/receivers that communicate with mobile user terminals.

A number of different mobile telecommunication systems have been proposed that use satellite communication links to the mobile user terminals. One network known as the IRIDIUM™ satellite cellular system is described in for example EP-A-0365885 and US Patent No. 5 394 561 (Motorola), which makes use of a constellation of so-called low earth orbit (LEO) satellites, that have an orbital radius of 780 km. Mobile user terminals such as telephone handsets are configured to establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). These orbits are also known as intermediate earth orbits (IEOs). The ICO™ satellite cellular system described for example in GB-A-2 295 296 includes a constellation of MEO satellites. Communication does not occur between adjacent satellites and instead, a signal from a mobile user terminal such as a mobile handset is directed firstly to the satellite and then directed to a ground station or satellite access node (SAN), connected to a land-based telephone network. This has the advantage that many components of the system are compatible with known digital terrestrial cellular technology such as GSM.

Radio coverage is cellular, similar to GSM. However, cells are served by spot beams, using highly directional antennas placed on orbiting satellites. In the ICO™ system, there are 10 satellites, divided into two orthogonal planes, each satellite having 163 highly directional antennas. The satellite-based system differs from the ground-based GSM system in that spot beams move across the earth and the cells they define are larger. Furthermore, spot beams from different satellites can overlap and such overlap is time varying.

The spot beams carry two-way call traffic comprising data, sent in bursts at specific time intervals and allotted frequencies. It is known to use CDMA, FDMA and TDMA techniques for this purpose. Despite the piecemeal nature of such traffic, each call takes up a portion of spectrum. As more calls are carried over the radio link, more bandwidth is used. However, the radio frequency spectrum is finite and its division and national regulatory bodies govern allocation. Thus, only a restricted range of frequencies is available for use by the satellite system.

Because the cellular spot beams are highly directional and radio signal strength falls off quickly with distance at the edges of the cells, it is possible to "re-use" the same small portion of radio frequency spectrum from one spotbeam to another. However, this re-use of frequency requires careful management, especially since spot beams can cover a large area and can overlap. Providing sufficient traffic channels to a small region of high demand may use up much of the available bandwidth so leaving little bandwidth to provide service to adjacent regions.

It has previously been proposed to analyse the allocation of spectrum to the beams on a beam-by-beam basis. However, due to the large number of beams and the numerous regulatory requirements of different countries, the computation required is extremely large and time-consuming, which severely limits the ability to plan the spectrum allocation in a network effectively.

The present invention seeks to solve this problem.

According to the present invention, non-reuse areas are defined corresponding to a group of cells wherein spectrum cannot be used more than once concurrently, and are considered in relation to a plurality of zones, within the area of coverage of the network. The non-reuse areas each overlie a respective one of said zones and partially overlap zones adjacent to the overlaid zone. Spectrum is allocated to the non-reuse areas for allocating spectrum to their respective overlaid zones. A determination is made of the spectrum used in zones that are partially overlapped by the non-reuse areas as a result of the allocation of spectrum to the non-reuse areas. This allows the allocation of spectrum to the zones to be optimised individually.

An offered traffic spectrum is defined corresponding to the spectrum to be consumed by call traffic in the zones individually and the allocation of spectrum to the non-reuse areas may be carried so as to optimise allocation of spectrum to the zones individually in relation to their offered spectrum.

A maximum available spectrum may be defined for the zones individually and the spectrum allocated to the zones individually to optimise the allocation in relation to their offered spectrum and their maximum available spectrum and to maximise the system's capacity to handle the offered traffic spectrum for all of the zones.

Alternatively, there may be calculated for the zones individually, a maximum available spectrum needed to satisfy the offered traffic for the zones in dependence on the spectrum used in zones that are partially overlapped by the non-reuse areas by the allocation of spectrum to the non-reuse areas. This can be used for planning a network prior to commissioning.

An iterative technique may be used to allocate the amount of spectrum to the non re-use areas.

The non-reuse areas reduce the scale of the computation required to allocate spectrum, thereby improving the speed of the allocation process

The invention also includes a processor configured to perform the method and a telecommunications network that includes the processor, together with a computer program product for the processor.

In order that the invention may be more fully understood, an embodiment thereof will now be described by way of example with reference to the accompanying drawings, in which:

Figure 1 is a schematic diagram of a satellite mobile communications network;

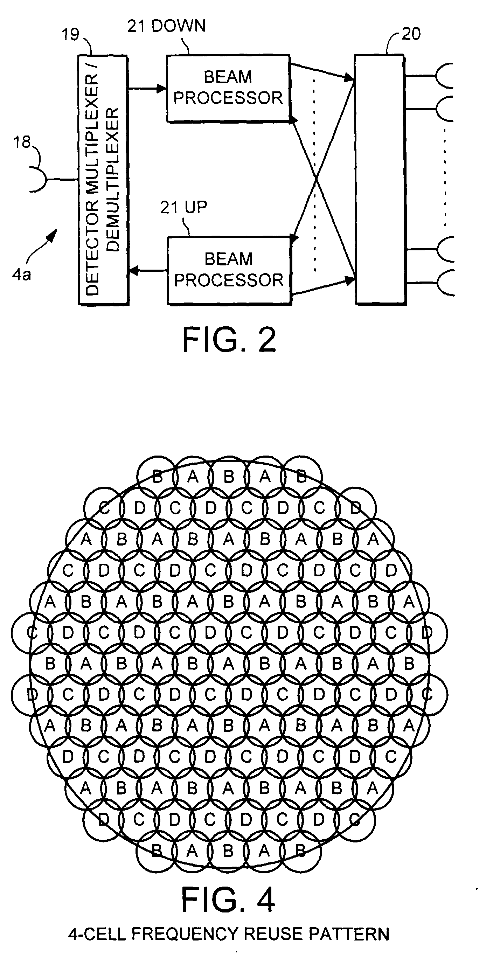

Figure 2 is a schematic diagram showing communication circuits of a satellite;

Figure 3 is a schematic diagram of the footprint of the satellite divided into spot-beams;

Figure 4 is a schematic diagram illustrating the assignment of four frequencies amongst an array of spot-beams;

Figure 5 is a diagram of a constellation of satellites in the same orbital plane indicating leading and trailing edges their respective footprints;

Figure 6 is a schematic of an array of spot-beams with frequency re-use, modified to take account of the overlap between the leading and trailing edge of two satellites;

Figure 7 is a schematic diagram of traffic demand in different regions of the earth, in which the area of the circle in each region is proportional to the demand;

Figure 8 is a diagram showing a circle encompassing the worst non re-use area;

Figure 9 a schematic diagram showing spectrum in adjacent regions is consumed for a single test point;

Figure 10 is a schematic diagram similar to Figure 9 using two and three test points;

Figure 11 is a schematic block diagram of processing steps performed at NMC 21 to compute spectrum allocation and control call distribution to comply with the spectrum allocation; and

Figure 12 is a schematic block diagram of a process for updating the spectrum allocation.

## Overview of network

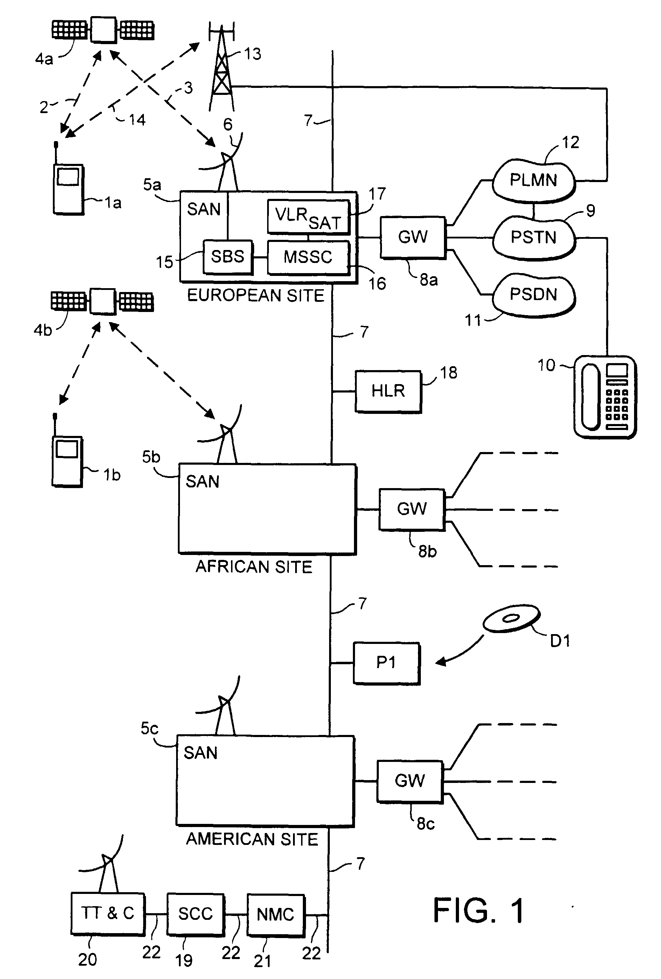

Referring to Figure 1, a schematic block diagram of a satellite mobile telecommunication network is shown corresponding to the ICO™ network. A first mobile user terminal 1a in the form of a mobile telephone handset can communicate on a radio channel over a communication path 2, 3 via an earth orbiting satellite 4a with a first land-based satellite access node (SAN) 5a. As shown schematically in Figure 1, the first SAN 5a is provided with an antenna configuration 6 that can track the orbiting satellite 4a. The antenna configuration 6 may include five dish antennae for tracking individual ones of the satellites 4.

A number of the SANs 5a, 5b, 5c, etc are connected together to form a backbone network 7, which is connected through a number of gateways (GW) 8a, 8b, 8c, etc to conventional land-based telephone networks. For example, the first GW 8a is connected to a land-based public switch telephone network (PSTN) 9, which permits connection to be made to a conventional telephone set 10. The first GW 8a is additionally connected to a public switch data network (PSDN) 11 and a public land mobile network (PLMN) 12. Each GW 8a, 8b, 8c may comprise existing International Switching Centres or mobile switching centres (MSCs) of the type used in GSM mobile networks. The gateway functions may be performed within each SAN, or externally of the SANs as shown schematically in Figure 1.

The user terminal 1a can also communicate with the conventional land-based mobile network PLMN 12, which is shown schematically to include a transceiver station 13 that establishes a duplex link 14 with the user terminal 1a. In this example, the PLMN 12 is a GSM network.

For a fuller understanding of GSM, reference is directed to the various GSM Recommendations issued by the European Telecommunications Institute (ETSI). Also reference is directed to "The GSM System for Mobile Communications" by M. Mouly and M-B. Paulet, 1992 Cell & Sys, ISBN:2-9507190-0-7, for a more readable overview. For a more detailed discussion of the ICO™ system, reference is directed to EP-A-2295296.

## Satellite overview

The satellite network is designed to provide world-wide coverage and the satellites form part of a constellation of satellites, which may be arranged in several orbits. In one example, two orbits of five satellites are used, which can be shown to provide coverage of all of the surface of the earth, in which for a 10° satellite elevation angle, one satellite can be accessed by the mobile handset all of the time and two satellites can be accessed on average for 80% of the time, thereby providing system redundancy. Additional satellites may be included in the constellation in order to provide further redundancy and diversity.

The satellites may be arranged in a MEO constellation, for example with an orbital radius of 10,390 km, although the invention is not restricted to a particular orbital radius. In this embodiment, satellites 4a, 4b are shown in a common orbit and the satellites are tracked by the antenna arrangement of each SAN. The SANs are spaced around the earth in order to provide continuous coverage.

The satellites are in non-geostationary orbits and comprise generally conventional satellites such as the Hughes HS 601 and may include features disclosed in GB-A-2 288 913.

The satellites are controlled by means of a satellite control centre (SSC) 19 and a tracking telemetry and control station (TT&C) 20, which are connected to a network management centre (NMC) 21 through a digital network 22 that is coupled to the backbone network 7. The SSC 19 and the TT&C 20 control operation of the satellites 4a, 4b, e.g. for setting the transmission power levels and transponder input tuning, as directed by the NMC 21. Telemetry signals for the satellites 4a, 4b are received by the TT&C 20 and processed by the SSC 19 to ensure that the satellites are functioning correctly.

Referring to Figure 1, the satellite 4a communicates with a SAN 5 via a two-way antenna 18. SAN-satellite signals 3 are converted in a multiplexer/demultiplexer 19. The satellite communicates with a plurality of UTs 1a through an antenna array 20 of 163 spot beam antennas 20. An up-beam processor 21 up and a down-beam processor 21 down processes the signals accordingly, to assemble and disassemble the signals fed to and from the spot beams

**Spot-beams**

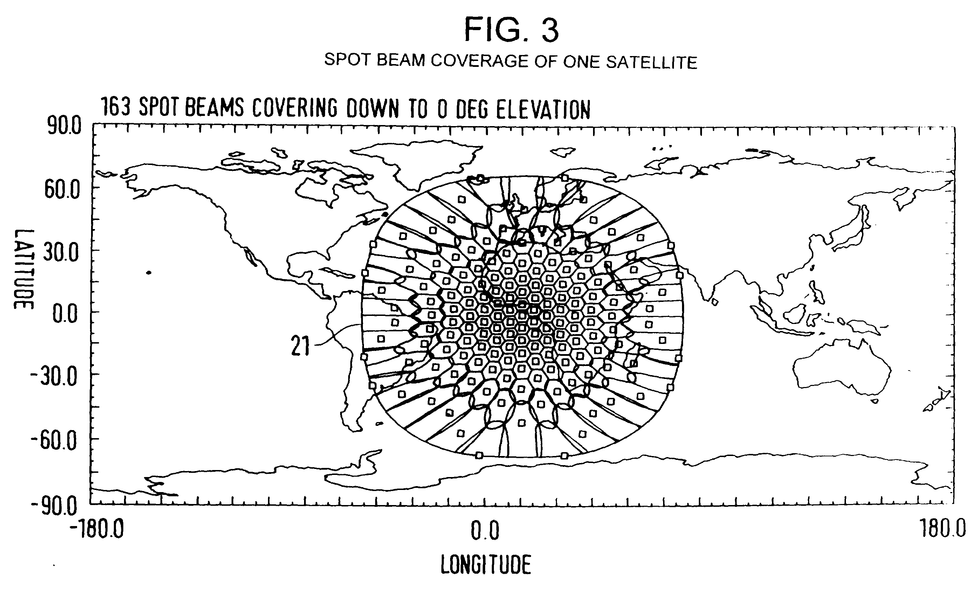

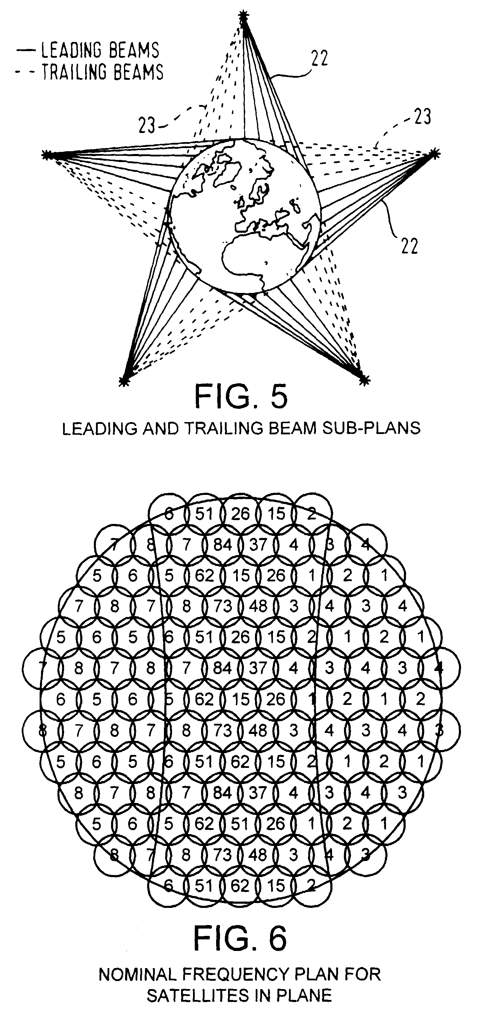

Referring to Figures 3 and 4, the array of 163 spot beams from each satellite covers a footprint 21 on the earth beneath each satellite, each beam including a number of different frequency channels and time slots as described in GB-A-2 293 725. The beams thus provide adjacent cellular areas that correspond to the cells of a conventional land-based mobile telephone network. The number of channels that can be provided in each spot beam is adjustable and can be controlled from the earth via the SANs.

The beam frequencies are re-used using the radio equivalent of a four colour map. In the well known, four-colour map theorem, any map that is subjected to any manner of division on a continuous surface, can be coloured using just four colours, such that no area of one colour abuts any other area of the same colour. In a similar fashion, the array of spot beams comprises groups of four spot beams A, B, C, D, shown in Figure 4, each spot beam of the group using allocable frequencies not available to the other beams in the group.

Referring to Figures 5 and 6, this arrangement is modified to take account of the overlap of footprint of adjacent satellites in the same orbit. The leading edge 22 of one footprint overlaps with the trailing edge 23 of the footprint "in-front". To avoid frequency overlap, the leading and trailing portions of each cone of radio coverage have separate sets of 4 frequencies, divided between their spot beams, thereby effectively dividing the frequencies into 8 sets. The arrangement is modified still further to take account of two planes of satellites, with 8 sets of frequencies apportioned to each plane of satellites.

**Spectral allocation to the spot beams**

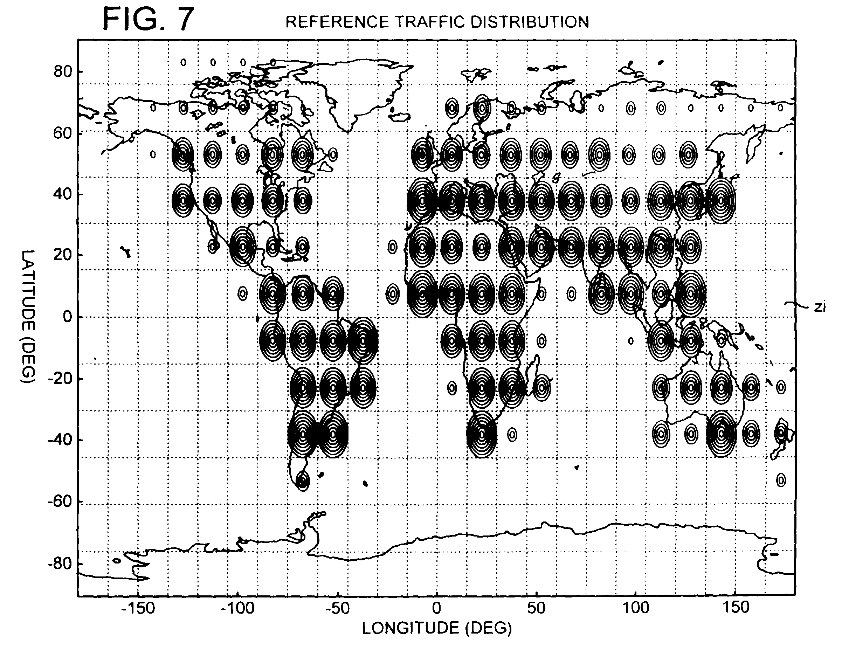

Referring to Figure 7, a map of the world is shown with a distribution of expected demand for calls through the satellite network. For convenience, the world is divided into 288 zones Z of 15 x 15 degrees of latitude and longitude. A circle is shown in each zone Z, which is of a size proportional to expected traffic demand, in order to illustrate the demand graphically. Thus, for example, it can be seen that traffic demand over the USA is relatively high whereas demand is relatively low in areas of low population or low 'phone use, such as in the middle of the Pacific Ocean.

As previously explained, each call takes up a part of the radio frequency spectrum available through one of the satellites. Thus, the expected traffic demand for the network can be analysed in terms of notional units of spectrum such that each unit of spectrum is representative of a given number of concurrent calls in a particular zone Z. In the following discussion, the number of expected calls according to the traffic demand map of Figure 7, for a particular zone Z on the map, will be referred to as offered traffic $o$ and is measured in units of radio frequency spectrum.

The available spectrum of the satellite network is limited and thus should be allocated to spot beams of the satellites so as to satisfy the requirements of the offered traffic as far as possible. The amount of radio frequency spectrum allocated to the individual spot beams thus needs to be configured so as to satisfy the relatively high spectrum requirement of the offered traffic for zones Z of high usage such as over the USA and the relatively low requirement of zones of low usage such as over the Pacific Ocean. An improved way of allocating available spectrum to the spot beams for this purpose will now be explained. According to this method, the spot beams are treated together in the groups A, B, C & D that contain non-reusable frequencies and the spectral allocation is made in relation to the groups.

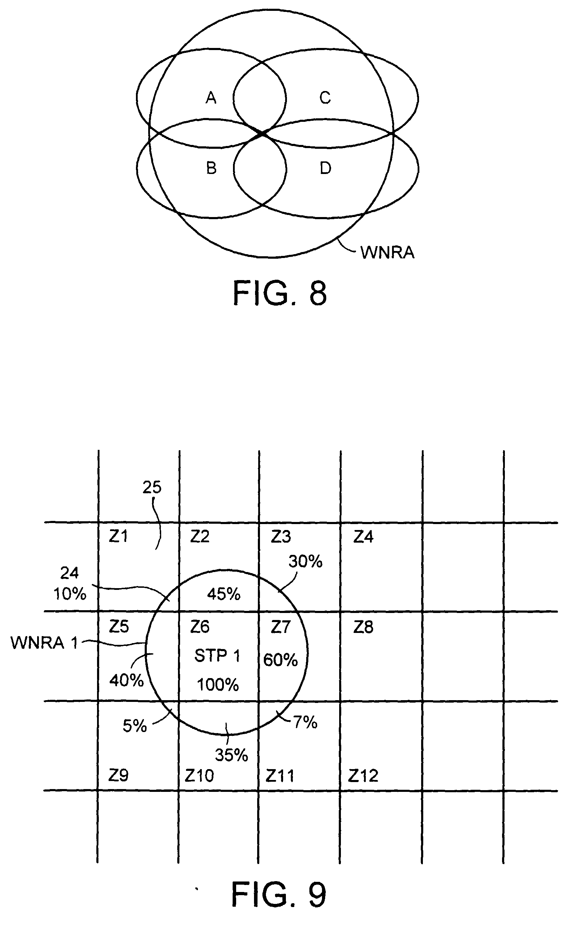

Referring to Figure 8, no frequency can be re-used within the cells produced by the group of four spot beams A, B, C & D, in case two adjacent cells interfere. The area covered by the four spot beams is referred to herein as a "non re-use area" (NRA). If call traffic is carried over all the available frequencies for this group of beams, an increase in call traffic can only be accommodated by increasing the allocated spectrum.

The largest NRA is found at the edge of a satellite's field-of-view of the earth, with the cells produced by spot beams at the edge of the array as shown in Figure 3. Here, the spot beams project onto a larger area of the earth than at the centre of the satellite's field of view, due to the curvature of the earth. For example, with the ICO™ antenna geometry, which provides 163 beams, this "worst case" covers 1.7% of the surface of the earth and represents a circle encompassing two of the outermost edge beams and the two beams next immediately inward from the edge of the array.

This worst case NRA (WNRA) is used as an analytical tool for allocating spectrum. A spectrum test point (STP) is placed at the centre of the WNRA to model call traffic provision.

Referring again to Figure 7, the zones Z each have an associated offered traffic $o$ relating to the expected demand as previously explained. Also the zones Z each have an associated available spectrum $s$ which may be set by regulatory requirements of individual geopolitical regions and/or by the call handling capacity of the satellite network itself. For example, the zones Z over North America may have an available spectrum $s$ limited to 30 Mhz by regulatory requirements.

In the following method, WNRAs are used to optimise allocation of spectrum to all of the zones Z via the spot beams of the satellite, in order to match as far as possible the available spectrum s to the offered spectrum o for each zone. The spectrum for signals transmitted on an uplink to the user terminal from the SAN via the satellite and a downlink from the user terminal to the SAN, can be treated individually or collectively.

The properties of a WNRA will now be described with reference to Figure 9. WNRA 1 is shown with its STP within zone Z6 on the earth. The WNRA 1 not only encompasses Z6, but also encroaches, by different amounts, on surrounding zones Z1, 2, 3, 5, 7, 9, 10 and 11. To illustrate characteristics of the WNRA, the provision of one unit of spectrum to the spot beams that make up the WNRA will be considered. One unit of spectrum is thus provided to zone Z6 because WNRA 1 completely overlies zone Z6. However, the provision of one unit of spectrum to Z6 results in the amount of available spectrum being reduced for the other, surrounding zones overlapped by the WNRA. This is because the unit of spectrum by definition cannot be reused within the WNRA but can be reused outside of it. The amount of spectrum consumed by WNRA 1 in the partially overlapped, surrounding zones Z1, 2, 3, 5, 7, 9, 10 and 11 is assumed to be proportional to the fraction of their zonal area covered by the WNRA 1. The rationale for this assumption is discussed in more detail hereinafter.

For example, in Figure 9, WNRA 1 overlaps 10% of the area of zone Z1, in which case, no reusable spectrum is available in overlap region 24. Conversely, the unit of spectrum is available for reuse in the remaining 90% of zone Z1, non-overlap region 25. This all-or-nothing distribution of spectral availability is averaged out across the zone Z1, yielding a mean amount of spectrum available across the whole zone, which in this example is 90% of the spectrum available.

Such averaging occurs because WNRAs are moving objects and Figure 9 shows only a snapshot of the WNRA 1 at one moment in time. Spot-beams, and hence WNRAs, move across the surface of the earth resulting in continuously varying amounts of overlap between WNRAs and zones. However, the spectral use of each zone is relatively static. It can therefore be deduced that the amount of spectrum consumed by WRNA 1 in the partially overlapped, surrounding zones is, for modelling purposes, approximately proportional to the fraction of their zonal area covered by the WNRA. This assumption is made in the method described hereinafter.

Thus, in the example of Figure 9, the WNRA 1 overlaps 10% of the area of zone Za and so traffic to a point in zone Za employing an adjacent group of spot beams and using the same repeated frequencies as those of WNRA 1 has, on avenge, only 90% of the allocable spectrum available to it, thus limiting its capacity.

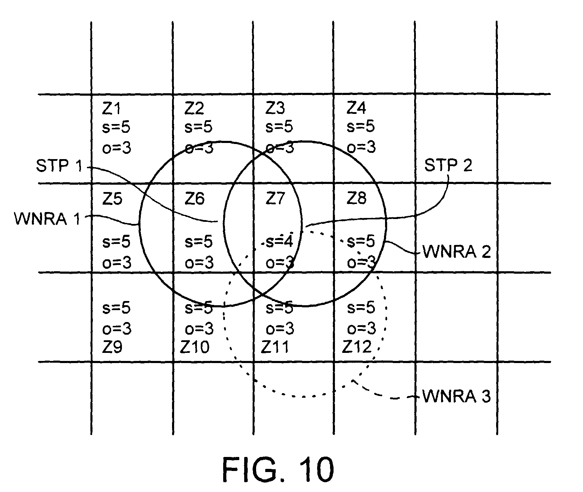

Multiple WNRAs can be used to test traffic provision for the zones Z individually so as to optimise the spectrum allocation taking into account the offered traffic $o$ and the available spectrum $s$ from zone to zone. A simple example using two WNRAs for adjacent zones will now be described with reference to Figure 10. In this example, WNRA 1 has its STP 1 in zone Z6 and WNRA 2 has its STP 2 in zone Z7. The available spectrum $s$ and the offered traffic $o$ for each of zones Z1 - Z12 of Fig. 10 in arbitrary units of spectrum, are set out in Table 1.

Table 1

| Zone | Z1 | Z2 | Z3 | Z4 | Z5 | Z6 | Z7 | Z8 | Z9 | Z10 | Z11 | Z12 |
|---|---|---|---|---|---|---|---|---|---|---|---|---|
| $s$ | 5 | 5 | 5 | 5 | 5 | 5 | 4 | 5 | 5 | 5 | 5 | 5 |

Table 1 (continued)

| Zone | Z1 | Z2 | Z3 | Z4 | Z5 | Z6 | Z7 | Z8 | Z9 | Z10 | Z11 | Z12 |
|------|----|----|----|----|----|----|----|----|----|-----|-----|-----|
| $o$ | 3 | 3 | 3 | 3 | 3 | 3 | 3 | 3 | 3 | 3 | 3 | 3 |
| WNRA1 overlap % | 10 | 45 | 30 | 0 | 40 | 100 | 60 | 0 | 5 | 35 | 07 | 0 |
| WNRA 2 overlap % | 0 | 10 | 45 | 30 | 0 | 40 | 100 | 60 | 0 | 11 | 35 | 07 |

Two computations will now be described for determining the spectrum to be allocated to cells Z6 and Z7. In the first computation, the spectrum allocation to zone Z6 is optimised and the effect on Z7 is determined. The combined spectral capacity for traffic in both zones Z6 and Z7 is then computed. In the second computation, the spectrum allocation to zone Z7 is optimised and the effect on Z6 is determined. The combined spectral capacity for traffic in both zones is then computed and compared with the result of the first computation in order to determine which of the two computations gives the best result.

*First computation - zone Z6 optimised*

In this computation, it is assumed that all of the offered traffic $o$ = 3 for zone Z6 is served by WNRA 1. This can be done because the available spectrum $s$ = 5 is greater than the offered traffic. As previously explained, The allocation of spectrum to WNRA 1 for zone Z6 also uses up capacity in the surrounding zones Z1-Z3, Z5, Z7, Z9-Z12 in relation to the amount of overlap of WNRA 1 with the zones. The amount of overlap is shown as a percentage in Table 1 for the individual zones.

The effect of WRNAs 1 and 2 on the zones surrounding Z6 will now be discussed in relation to Table 2.

Table 2

| | Zone | Z1 | Z2 | Z3 | Z4 | Z5 | Z6 | Z7 |
|---|------|----|----|----|----|----|----|----|
| Row | **S** | 5 | 5 | 5 | 5 | 5 | 5 | 4 |
| A | **Z6 - Used** | 0.10 x 3 = 0.30 | 0.45 x 3 = 1.35 | 0.30 x 3 = 0.90 | 0 | 0.40 x 3 = 1.20 | 3 | 0.60 x 3 = 1.80 |
| B = S - A | **Z6 - remainder** | 5 - 0.3 = 42 | 5 - 1.35 = 3.65 | 5 - 0.9 = 4.1 | 5 - 0 = 5 | 5 - 1.2 = 3.8 | 5 - 3 = 2 | 4 - 1.8 = 2.2 |
| C | **Z7 - Used** | 0 | 0.1 x 2.2 = 0.22 | 0.45x2.2 = 0.99 | 0.30x2.2 = 0.66 | 0 | 0.40x2.2 = 0.88 | 2.2 |
| D = B - C | **Overall remainder** | 4.7 | 3.43 | 3.11 | 4.34 | 3.8 | 1.12 | 0 |
| | **Zone** | **Z8** | **Z9** | **Z10** | **Z11** | **Z12** | | |
| Row | **S** | 5 | 5 | 5 | 5 | 5 | | |
| A | **Z6 - Used** | 0 | 0.05 x 3 = 0.15 | 0.35 x 3 = 1.05 | 0.07 x 3 = 0.21 | 0 | | |
| B = $s$ - A | **Z6 - remainder** | 5 - 0 = 5 | 5-0.15 = 4.85 | 5-1.05 = 3.95 | 5-0.21 = 4.79 | 5 - 0 = 5 | | |
| C | **Z7 - Used** | 0.6 x 2.2 = 1.32 | 0 | 0.05x2.2 = 0.11 | 0.35x2.2 = 0.77 | 0.07x2.2 = 0.15 | | |
| D = B - C | **Overall remainder** | 3.68 | 4.85 | 3.84 | 4.02 | 4.85 | | |

In row A of Table 2, the spectral capacity for each zone that has been used by WNRA 1 is shown. Row B in Table 2 indicates the spectral capacity that remains for each zone, after deducting the effect of WNRA 1.

Considering zone Z3 as an example, Three spectral units ($o$ =3) have been allocated to WNRA 1, which overlaps 30% of zone Z3 (see Table 1). Therefore, 0.30 x 3 = 0.9 spectral units of zone Z3 are used up by WNRA 1 (see row A).

The available spectrum *s* for zone Z3 is 5 units. Therefore the capacity that remains after deducting the effect of WNRA 1 is 5 - 0.9 = 4.1 units of spectrum.

Considering the effect of WNRA 1 on zone Z7, it overlaps 60% of zone Z7 (see Table 1). Therefore, 0.60 x 3 = 1.8 spectral units of zone Z7 are used up by WNRA 1 (see row A).

The available spectrum *s* for zone Z7 is 4 units. Therefore the capacity of Z7 that remains after deducting the effect of WNRA 1 is 4 - 1.8 = 2.2 units of spectrum (see row B).

It would be desirable to deliver 3 units of spectrum to zone Z7 in order to fulfil completely the spectral requirement of the offered traffic *o* for Z7, namely 3 units of spectrum (see Table 1). However, as shown above, the spectral requirements of WNRA 1 restrict the capacity of zone Z7 to 2.2 units of spectrum. The capacity of WNRA 2 thus has to be set to 2.2 units of spectrum.

WNRA 2 has an impact on the zones that surround Z7. Considering again zone Z3 as an example, WNRA 2 partially overlaps zone Z3 by 45% (see Table 1) and so the capacity of Z3 is used up by a further 0.45 x 2.2 = 0.99 units of spectrum (see row C). As discussed above, the effect of WNRA 1 was to reduce the available spectrum from 5 units by 0.9 units to 4.1 units. The effect of WNRA 2 is therefore to reduce the capacity of Z3 still further, as shown in row D, to 4.1 - 0.99 = 3.11 units

The remaining capacity for the other zones is similarly computed, as shown in row D of Table 2. The remaining capacity in the zones can be allocated to optimise further WNRAs, as will be described later.

The total spectrum to be used for the offered traffic *o*, by the zones Z6 + Z7 according to the first computation (in which the capacity of Z6 is optimised) is thus 3 + 2.2 = 5.2 units of spectrum. These values can be seen in Table 2.

*Second computation - zone Z7 optimised*

In this computation, the capacity of zone Z7 is optimised. Thus, the 3 units of the available spectrum *s* for zone Z7 are allocated for all the offered traffic (*o* =3) for the zone. This can be done because the available spectrum *s* = 4 for zone Z7, leaving a remainder of 1 unit of spectrum. Table 3 shows the effect of WNRA 2 on the cells that surround zone Z7 in row A. The capacity of the zones which remains after the effect of WNRA 1 is deducted, is shown in row B. The calculations are carried out in the same way as described for the first computation.

Considering zone Z6 and associated WNRA 1, it would be desirable that as much of the offered traffic *o* = 5 be handled. However, not all the traffic can be handled because WNRA 2 overlaps zone Z7 by 60% (Table 1) where only 1 unit of spectrum remains unused (row B). If the maximum traffic that can be handled by Z6 is called *x*, it follows that 0.6 *x* is used up in zone Z7, where only 1 unit of spectrum is available for use by WNRA 2. Thus:

$$0.6\ x = 1$$

i.e. *x* = 1.66

Thus, only 1.66 units of offered traffic can be used for WNRA 1 in zone Z6 (row C) when optimising spectral use in zone Z7. The effect of the overlap of WNRA 1 on the zones that surround Z6 is shown in row C of Table 3 and the overall spectrum that remains after taking account of both WNRAs 1 & 2 is shown in row D.

Table 3

| | Zone | Z1 | Z2 | Z3 | Z4 | Z5 | Z6 | Z7 |
|---|---|---|---|---|---|---|---|---|
| Row | **S** | 5 | 5 | 5 | 5 | 5 | 5 | 4 |
| A | **Z7- Used** | 0 | 0.10 x 3 = 0.30 | 0.45 x 3 = 1.35 | 0.30 x 3 = 0.90 | 0 | 0.40x 3 = 1.20 | 3 |
| B = S - A | **Z7 - remainder** | 5 - 0 = 5 | 5 - 0.30 = 4.70 | 5 - 1.35 = 3.65 | 5 -0.90= 4.1 | 5 - 0 = 5 | 5-1.20 = 3.8 | 4 - 3 = 1 |
| C | **Z6 - Used** | 0.1x1.66 = 0.166 | 0.45x1.66 = 0.747 | 0.30x1.66 = 0.498 | 0 | 0.40x1.66 = 0.664 | 1.66 | 0.6x1.66 = 1 |
| D = B - C | **Overall remainder** | 4.834 | 3.953 | 3.152 | 4.1 | 4.336 | 2.133 | 0 |
| | Zone | Z8 | Z9 | Z10 | Z11 | Z12 | | |
| Row | **S** | 5 | 5 | 5 | 5 | 5 | | |
| A | **Z7 - Used** | 0.60 x 3 = 1.8 | 0 | 0.05 x 3 = 0.15 | 0.35 x 3 = 1.05 | 0.07 x 3 = 0.21 | | |
| B = s - A | **Z7 - remainder** | 5 - 1.8 = 3.2 | 5 - 0 = 5.0 | 5-0.15 = 4.85 | 5-1.05 = 3.95 | 5 - 0.21 = 4.79 | | |
| C | **Z6 - Used** | 0 | 0.05x1.66 = 0.083 | 0.35x1.66 = 0.581 | 0.07x1.66 = 0.116 | 0 | | |
| D = B - C | **Overall remainder** | 3.20 | 4.92 | 4.27 | 3.83 | 4.79 | | |

The total spectrum to be used for the offered traffic $o$, by the zones Z6 + Z7 according to the second computation, (in which the capacity of Z7 is optimised) is thus 3 + 1.66 = 4.66 units of spectrum. These values can be seen in Table 3.

*Comparison of results*

The total spectrum to be used for the offered traffic $o$, by the zones Z6 + Z7 is thus maximised by the first computation which gives a result of 5.2 units, compared with 4.66 units by the second computation. Thus, when considering just zones Z6 and Z7 a spectral allocation according to Table 2 is preferred.

This simple example can be extended to include further STPs. To provide a simple explanation, the effect will be considered of a third WNRA 3 with its STP in zone Z11, as shown in dotted outline in Figure 10. Then, calculations are carried out as described above to optimise use of spectrum in the zones Z6, Z7 and Z11 in all combinations of order of preference, as follows:

Table 4

| Order of preference | 1st | 2nd | 3rd |
|---|---|---|---|
| 1st computation | Z6 | Z7 | Z11 |
| 2nd computation | Z6 | Z11 | Z7 |
| 3rd computation | Z7 | Z6 | Z11 |
| 4th computation | Z7 | Z11 | Z6 |
| 5th computation | Z11 | Z6 | Z7 |
| 6th computation | Z11 | Z7 | Z6 |

The results of these computations are compared to see which gives the highest spectral use for the sum of zones Z6, Z7 and Z11 and the spectral allocation produced by the selected computation is adopted.

An iterative technique can be used to optimise the allocation of spectrum to the zones, as an alternative to the comparative method just described. Mary Ann Branch and Andrew Grace, give an example of a suitable iterative technique in "Matlab Optimization Toolbox Guide", Mathworks Inc., pp 3 - 55, December 1996, (http//www.mathworks.com).

This method can be extended to cover all of the 288 zones Z. An individual STP is located in each zone and an iterative linear programming technique is used to carry out the computations for the different combinations and compare the results so as to choose the highest total use of spectrum, to satisfy best the offered traffic *o* for all 288 zones.

It can be shown that the STPs do not need to be located in a regular pattern for the calculation to work Some STPs may be omitted in non-critical areas to simplify the calculation. Some of the WNRAs may be weighted by a weighting factor to increase the value of traffic to certain preselected zones.

The calculation thus yields an optimum allocation of spectrum for each zone Z on the map shown in Figure 7. In use, the calculation may be carried out in a processor at the NMC 21 shown in Figure 1, which instructs the SANs to control the call traffic to the individual zones Z not to exceed the allocated spectrum for each zone, as determined by the calculation.

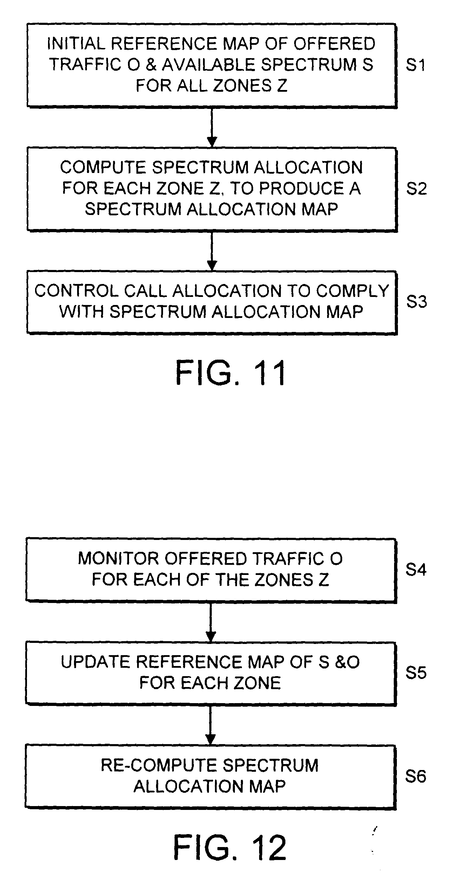

The calculation process is shown schematically in Figure 11. At step S1, an initial map of the individual values of offered traffic *o* and available spectrum *s* for each individual zone Z is established. This corresponds to the reference traffic distribution shown in Figure 7. The maximum available spectrum may be determined by physical constraints of the satellite system but the actual value *s* selected may be determined by regulatory requirements and marketing information about expected demand and achievable pricing for the satellite service, zone by zone and country by country. The offered traffic *o* may be selected on the basis of initial marketing information concerning expected demand for the service.

At step S2, the previously described calculation process determines the spectrum allocation, zone by zone, to determine the optimum spectral allocation for each zone Z.

At step S3, the spectrum allocation data produced in step S2 is supplied by NMC 21 to the SANs, which use the data to limit the number of calls and hence the spectrum, so that the spectral allocation of each zone Z is not exceeded. As previously described, the bandwith of each satellite antenna spot beam is dynamically controllable at the SAN, permitting the spectral control to be performed for each zone individually, as the spot beams sweep over the zones, due to rotation of the satellites about the earth.

Figure 12 illustrates how the initial map used at step S1 can be updated. The traffic that is actually carried by the system during a period of actual use of the network is monitored at step S4. The traffic may be monitored at the SANs and reported periodically to the NMC 21, which builds up a database of actual usage, zone by zone. This enables the offered traffic values *o* to be updated in the light of actual experience of running the network. Also, any changes in available spectrum *s* due to regulatory changes or other reasons are logged.

Then at step S5, the initial map is updated zone by zone to, take account of the data accumulated at step S4. Of course, step S5 may be carried out during the monitoring period of the actual traffic rather than as a separate step.

At step S6, the spectrum allocation is re-calculated zone by zone, using the computation process previously described, on the basis of the updated values of the offered traffic and the available spectrum produced at step S5. The call allocation of step S3 is then controlled to maintain use of the spectrum on a zone by zone basis, within the zonal allocations determined by step S6.

The process of steps S5 and S6 may be performed at the NMC 21 continuously, at regular time intervals or every fixed number of calls made, to ensure that no spectral overloading is taking place in any one part of the network. Even though an individual zone Z is far from overloaded, the analysis may prove that allowing further traffic at one zone may overload the spectrum in another zone. Hence, the traffic can be curtailed through congestion control or call refusal. The NMC 21 may thus instruct the MSSC 16 to prevent call set up. Alternatively, the assignment of channels may be delayed until one becomes available.

In summary, by monitoring call traffic and determining in which regions spectral overloading can take place, radio frequency spectrum can be allocated accordingly in different regions without exceeding levels set by regulatory bodies of different nations.

It will be appreciated that many variations of the described embodiment can be made. For example, the method of determining where spectral overloading is likely to occur, can be used to plan a new satellite communication system, thus ensuring the system is able to provide sufficient service when commissioned. Alternatively, the method can be used once the satellite system is operational to predict likely conflicts whenever regulatory restrictions are proposed.

In another modification, the iteration is computed without defining a maximum available spectrum for the zones individually and instead is carried so as to satisfy completely the spectral requirements of the offered spectrum zone-by-zone. The computation thus indicates the maximum available spectrum needed to satisfy all the traffic zone-by-zone. This can be useful for designing the initial traffic handling capacity prior to commissioning the network.

The calculations can be carried out at locations other than the NMC 21 in the network, for example in a distributed manner at the SANs or at a dedicated processor P1 connected to the network (Fig. 1). The calculation of spectrum allocation may be performed by a program on a computer readable medium such as a magnetic or optical disk D1, inserted in the processor P1. In fact, the processor P1 need not be connected to the network. The processor may receive data concerning the offered traffic and the available spectrum, so as to provide a bureau service for networks. The result of the calculations performed by the processor may be supplied on disk or via e-mail to the network and then used to control the SANs in order to ensure that the call traffic does not exceed the allocated spectrum, zone-by-zone.

Many other modifications and variations fall within the scope of the invention. For example, the non-reuse areas may include more than the four cellular areas A, B, C, D as previously described. Also, the non-reuse area used in the computations need not be the worse case area, and the worse case area may, if used, be of a different area to the example given. The non-reuse areas need not necessarily be circular and could be of other shapes.

The invention is not restricted to the satellite constellation described herein and can be used with LEO and other MEO constellations. The invention is also applicable to geo-stationary constellations in high earth orbits, and also to systems which use balloons or other types of airborne craft instead of earth orbiting satellites.

The form of signal transmission is not limited to the described TDMA configuration and other signal transmission techniques could be used, for example CDMA, FDMA or a combination thereof.

**Claims**

1. A method of allocating spectral transmission resources in a cellular telecommunications network with a given area of coverage, comprising:

   defining a non-reuse area corresponding to a group of cells wherein spectrum cannot be used more than once concurrently,
   defining a plurality of zones within the area of coverage of the network,
   defining a plurality of said non-reuse areas each overlying a respective one of said zones and partially overlapping zones adjacent to the overlaid zone,
   allocating spectrum to the non-reuse areas for allocating spectrum to their respective overlaid zones, and
   determining the spectrum used in zones that are partially overlapped by the non-reuse areas as a result of the allocation of spectrum to the non-reuse areas, to optimise the allocation of spectrum to the zones individually.

2. A method according to claim 1 including:

   defining an offered traffic spectrum for the zones respectively, corresponding to the spectrum to be consumed by call traffic in the zones individually, and
   allocating spectrum to the non-reuse areas such as to optimise the allocation of spectrum to the zones individually in relation to their offered spectrum.

3. A method according to claim 2 including:

   defining a maximum available spectrum for the zones respectively, and
   allocating spectrum to the non-reuse areas such as to optimise the allocation of spectrum to the zones individually in relation to their offered spectrum and their maximum available spectrum and to maximise the system's capacity to handle the offered traffic spectrum for all of the zones.

4. A method according to claim 3 including defining the maximum available spectrum for the individual zones as a function of regulatory requirements of geopolitical authorities within the zones.

5. A method according to claim 2, 3 or 4 including defining the offered traffic spectrum, zone by zone on the basis of a traffic planning data produced before operation of the network.

6. A method according to any one of claims 2 to 5 wherein the offered traffic spectrum is defined for the respective zones by monitoring call traffic that occurs during actual use of the network.

7. A method according to any preceding claim including using an iterative technique to allocate the amount of spectrum to the non re-use areas.

**8.** A method according to any preceding claim including preferentially allocating spectrum to the non-reuse area which overlies a particular one of the zones.

**9.** A method according to any preceding claim including defining the zones to be 15 x 15 degrees of latitude and longitude

**10.** A method according to claim 9 including defining the non-reuse areas to be representative of a generally circular area occupying 1.7% of the earth's surface.

**11.** A method according to any preceding claim including controlling transmission of calls for the zones individually so that the allocated spectrum is not exceeded.

**12.** A method according to any preceding claim including repeating the allocation of spectrum to the non-reuse areas.

**13.** A method according to claim 12 including repeating said allocation in response to a change in regulatory requirements or offered traffic spectrum for one of the zones.

**14.** A method according to claim 2 including calculating a maximum available spectrum for the zones respectively needed to satisfy the offered traffic for the zones in dependence on the spectrum used in zones that are partially overlapped by the non-reuse areas by the allocation of spectrum to the non-reuse areas.

**15.** A processor to allocate spectral resources of cellular telecommunications system with a given area of coverage, wherein the processor utilises parameters defining:

a non-reuse area corresponding to a group of cells wherein spectrum cannot be used more than once concurrently,
a plurality of zones within the area of coverage of the network, and
a plurality of said non-reuse areas overlying said zones individually and partially overlapping zones adjacent to the overlaid zones,
the processor being configured to allocate spectrum to the non-reuse areas for allocating spectrum to their respective overlaid zones, and to determine the spectrum used in zones that are partially overlapped by the non-reuse areas as a result of the allocation of spectrum to the non-reuse areas, so as to optimise the allocation of spectrum to the zones individually.
an offered traffic spectrum for the zones respectively, corresponding to the spectrum to be consumed by call traffic in the zones individually,

**16.** A cellular telecommunications system including a processor as claimed in claim 15.

**17.** A system according to claim 16 that comprises a satellite telecommunications network.

**18.** A computer program product stored on a computer usable medium, comprising computer code that causes a processor to allocate spectral resources in cellular telecommunications system with a given area of coverage, wherein the processor utilises parameters defining

a non-reuse area corresponding to a group of cells wherein spectrum cannot be used more than once concurrently,
a plurality of zones within the area of coverage of the network, and
a plurality of said non-reuse areas each overlying a respective one of said zones and partially overlapping zones adjacent to the overlaid zones,
the code being configured to cause the processor to produce an allocation of spectrum to the non-reuse areas thereby allocating spectrum to their respective overlaid zones, and to determine the spectrum used in zones that are partially overlapped by the non-reuse areas as a result of the allocation of spectrum to the non-reuse areas, and to optimise the allocation of spectrum to the zones individually.

# FIG. 1

19    21 DOWN                    20

DETECTOR MULTIPLEXER / DEMULTIPLEXER

18

4a

BEAM PROCESSOR

21 UP

BEAM PROCESSOR

## FIG. 2

## FIG. 4

4-CELL FREQUENCY REUSE PATTERN

# FIG. 3

SPOT BEAM COVERAGE OF ONE SATELLITE

163 SPOT BEAMS COVERING DOWN TO 0 DEG ELEVATION

EP 1 011 210 A1

— LEADING BEAMS
-- TRAILING BEAMS

# FIG. 5

LEADING AND TRAILING BEAM SUB-PLANS

# FIG. 6

NOMINAL FREQUENCY PLAN FOR
SATELLITES IN PLANE

FIG. 7    REFERENCE TRAFFIC DISTRIBUTION

FIG. 8

FIG. 9

| Z1 | Z2 | Z3 | Z4 |
|---|---|---|---|
| s=5 | s=5 | s=5 | s=5 |
| o=3 | o=3 | o=3 | o=3 |

STP 1

STP 2

WNRA 1

| Z5 | Z6 | Z7 | Z8 |
|---|---|---|---|
| s=5 | s=5 | s=4 | s=5 |
| o=3 | o=3 | o=3 | o=3 |

WNRA 2

| s=5 | s=5 | s=5 | s=5 |
|---|---|---|---|
| o=3 | o=3 | o=3 | o=3 |
| Z9 | Z10 | Z11 | Z12 |

WNRA 3

FIG. 10

| INITIAL REFERENCE MAP OF OFFERED TRAFFIC O & AVAILABLE SPECTRUM S FOR ALL ZONES Z | S1 |

↓

| COMPUTE SPECTRUM ALLOCATION FOR EACH ZONE Z, TO PRODUCE A SPECTRUM ALLOCATION MAP | S2 |

↓

| CONTROL CALL ALLOCATION TO COMPLY WITH SPECTRUM ALLOCATION MAP | S3 |

## FIG. 11

| MONITOR OFFERED TRAFFIC O FOR EACH OF THE ZONES Z | S4 |

↓

| UPDATE REFERENCE MAP OF S &O FOR EACH ZONE | S5 |

↓

| RE-COMPUTE SPECTRUM ALLOCATION MAP | S6 |

## FIG. 12

**European Patent Office**

## EUROPEAN SEARCH REPORT

Application Number

EP 98 31 0281

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|----------|------------------------------------------------------------------------------|-------------------|----------------------------------------------|
| A | WO 96 03814 A (INMARSAT) 8 February 1996 * page 3, line 15 - page 6, line 14 * | 1,15,18 | H04B7/204 |
| A | WO 95 28015 A (ERICSSON) 19 October 1995 * claims 1-42 * | 1,15,18 | |
| A | EP 0 616 437 A (MOTOROLA) 21 September 1994 * claims 1-10 * | 1,15,18 | |
| A | EP 0 876 007 A (ICO) 4 November 1998 * figure 3 * | 1,15,18 | |

TECHNICAL FIELDS SEARCHED (Int.Cl.6)

H04B

The present search report has been drawn up for all claims

| Place of search | Date of completion of the search | Examiner |
|-----------------|----------------------------------|----------|
| THE HAGUE | 21 June 1999 | Bischof, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 98 31 0281

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-1999

| Patent document cited in search report | | Publication date | Patent family member(s) | | Publication date |
|---|---|---|---|---|---|
| WO 9603814 | A | 08-02-1996 | GB | 2293725 A | 03-04-1996 |
| | | | AU | 2451895 A | 22-02-1996 |
| | | | CA | 2195662 A | 08-02-1996 |
| | | | EP | 0772922 A | 14-05-1997 |
| | | | GB | 2321372 A,B | 22-07-1998 |
| | | | GB | 2321831 A,B | 05-08-1998 |
| | | | JP | 10506246 T | 16-06-1998 |
| | | | ZA | 9506067 A | 11-03-1996 |
| WO 9528015 | A | 19-10-1995 | US | 5642358 A | 24-06-1997 |
| | | | AU | 692857 B | 18-06-1998 |
| | | | AU | 2275995 A | 30-10-1995 |
| | | | CN | 1145698 A | 19-03-1997 |
| | | | EP | 0755578 A | 29-01-1997 |
| | | | FI | 964030 A | 08-10-1996 |
| | | | JP | 10505468 T | 26-05-1998 |
| EP 616437 | A | 21-09-1994 | US | 5367304 A | 22-11-1994 |
| | | | CA | 2114709 A | 16-09-1994 |
| | | | JP | 6276141 A | 30-09-1994 |
| EP 876007 | A | 04-11-1998 | GB | 2324680 A | 28-10-1998 |
| | | | JP | 10336090 A | 18-12-1998 |

EPO FORM P0459

For more details about this annex : see Official Journal of the European Patent Office, No. 12/82